# FASCICULE DE BREVET EUROPEEN

(11) **EP 1 372 074 B1**
(45) Date de publication et mention de la délivrance du brevet: **10.08.2011**
(21) Numéro de dépôt: 03291397.2
(22) Date de dépôt: 12.06.2003
(51) Int. Cl.: G06F 9/46

(54) **Procédé et système de gestion des événements**
System und Verfahren zur Ereignisverwaltung
System and method for event management

(30) Priorité: 12.06.2002 FR 0207188
(43) Date de publication de la demande: 17.12.2003
(73) Titulaire: MBDA France, 75016 Paris (FR)
(72) Inventeur: Vazeille, Philippe, 18570 La Chapelle Saint-Ursin (FR); Bourgoin, Jean-Pierre, 18000 Bourges (FR)
(74) Mandataire: David, Alain

(56) Documents cités:
- EP-A- 0 537 098
- EP-A- 0 942 367
- US-A- 5 010 482
- US-A- 5 737 240
- HALANG W.A.; WANNEMACHER M.: 'High accuracy concurrent event processing in hard real-time systems' REAL TIME SYSTEMS vol. 12, no. 1, 1997, KLUWER ACADEMIC PUBLISHERS, DORDRECHT, NL, pages 77 - 94, XP000069593 ISSN: 0922-6443

## Description

### Arrière plan de l'invention

La présente invention concerne la gestion des événements dans un système informatique standard comportant une unité centrale connectée à des unités mémoires et des périphériques par un bus d'informations permettant un montage multi-maître.

La gestion de certains processus nécessite de prendre en compte la détection de paramètres et l'envoi des instructions de commande appropriées en temps réel ou dans un temps extrêmement court de l'ordre de la microseconde (µs). Ce type d'application se rencontre dans le domaine aéronautique ou spatial ou dans la gestion de certains processus industriels.

Il existe des systèmes de gestion en temps réel basés sur des contrôleurs logiques programmables. L'inconvénient de ces contrôleurs logiques est leurs faibles puissances de traitement et surtout leurs incompatibilités avec les réseaux informatiques classiques. En effet, la nature spécifique des systèmes basés sur les contrôleurs logiques ne permet pas de connecter ces systèmes à un réseau informatique d'architecture standard.

Par ailleurs, dans un système informatique standard par exemple à base d'un micro-ordinateur, équipé de canaux de communication ou bus d'informations rapides (par exemple le bus PCI) et piloté par un système d'exploitation multitâche (par exemple Windows NT), la gestion en temps réel n'est pas possible entre différentes unités du système informatique.

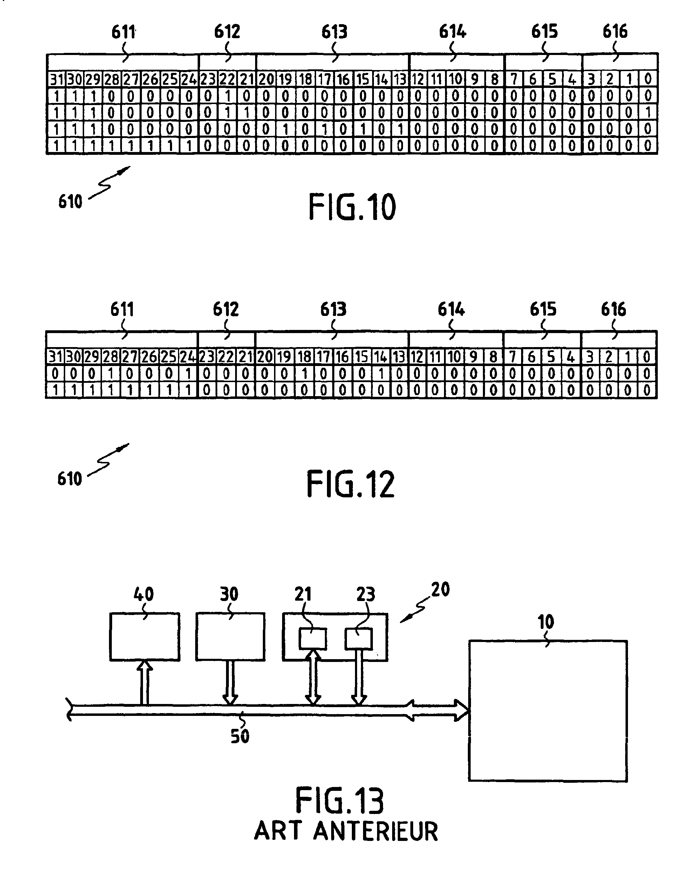

La figure 13 montre de façon très schématique, un système informatique standard comportant une unité centrale 10 pilotée par une horloge par exemple à 10MHz (non représentée), une unité mémoire 20 et des périphériques 30, 40 auxquels est ajouté un environnement logiciel ou système d'exploitation nécessaire au traitement de l'information. L'unité centrale 10 assure la commande et les opérations arithmétiques et logiques. L'unité mémoire 20 comprend aussi bien de la mémoire vive 21 que de la mémoire morte 23, tandis que les périphériques comprennent des interfaces d'entrée et de sortie. Les échanges de données, d'adresses, de signaux de commande et de synchronisation entre les différentes unités du système informatique s'opèrent grâce à un bus d'informations 50.

Dans un tel système informatique standard, équipé d'un système d'exploitation dit « temps réel », rien n'est prévu pour traiter précisément et rapidement l'arrivée de signaux discrets ou de données sur le bus d'informations 50. Ce genre de système d'exploitation ne permet qu'un dialogue entre l'unité centrale et une autre unité et avec des temps de réponses de l'ordre de la milliseconde (ms) qui sont inadaptés pour des processus comportant des paramètres importants et très sensibles comme dans les domaines aéronautique et spatial.

D'autres exemples concernant la gestion des événements dans un système informatique sont connus par le document de Halang et al, intitulé « High accuracy concurrent event processing in hard real-time systems », Real Time Systems, vol. 12, no. 1, pages 77-94 (1997) ainsi que par le document US5010482.

### Objet et résumé de l'invention

L'invention a pour but de remédier à ces inconvénients et propose à cet effet un procédé de gestion des événements, dans un système informatique standard comportant une unité centrale connectée à des unités mémoires et des périphériques par un bus d'informations permettant un montage multi-maître.

Le procédé comprend les étapes suivantes :
- recevoir les évènements,
- dater et stocker ces événements,
- attribuer au moins une action appropriée à chaque événement reçu,
- exécuter cette action en réponse à l'événement reçu,
de sorte que les étapes de gestion précitées sont réalisées en temps réel sans accéder à l'unité centrale, par une unité de gestion compris dans un module de gestion indépendant relié au bus d'information et implanté dans le système informatique standard, chaque événement reçu étant daté au moyen d'une horloge de datation comprise dans l'unité de gestion et étant stocké d'une part dans une première mémoire associée à l'unité de gestion et d'autre part dans une seconde mémoire associée à l'unité de gestion avec sa date d'arrivée, les événements stockés dans ladite première mémoire étant traités d'une manière synchrone, et ladite action attribuée à l'événement reçu étant lue dans une table des actions dans une mémoire vive associée à l'unité de gestion et préprogrammée au travers du bus d'information.

Ainsi, un système informatique standard est transformé en un système temps réel par l'implantation d'un unique module de gestion additionnelle.

L'arrivée d'un événement, sa datation et sa mémorisation sont de l'ordre de deux cycles d'horloge de datation à 10 MHz, la recherche de l'action dans la mémoire vive est de l'ordre de dix cycles d'horloge de synchronisation à 33 MHz, la préparation du traitement est de l'ordre de deux cycles d'horloge de synchronisation à 33 MHz, et l'exécution de l'action est de l'ordre de 5 cycles d'horloge de synchronisation à 33 MHz, de sorte que la gestion en temps réel est de l'ordre d'une microseconde.

De préférence, le module de gestion indépendant est isolé de l'unité centrale par un pont.

L'action à exécuter est lue dans une table des actions associée à l'unité de gestion et est préprogrammée au travers du bus d'informations.

Les événements reçus par l'unité de gestion peuvent être générés par un registre d'horloge interne au module de gestion, par une unité adjacente au module de gestion ou par un équipement extérieur au système informatique.

Les événements reçus par l'unité de gestion sont synchronisés à une fréquence correspondante à celle d'une horloge interne au système informatique.

Selon un mode particulier de l'invention, les événements reçus de l'équipement extérieur sont filtrés afin d'éliminer d'éventuels parasites.

Avantageusement, une interruption est générée par l'unité de gestion lorsqu'un événement ne peut pas être associé à une action.

L'invention a aussi pour but de fournir un module de gestion des événements implanté dans un système informatique standard comportant une unité centrale connectée à des unités mémoires et des périphériques par un bus d'informations permettant un montage multi-maître, ledit module de gestion comprend :
- une unité de gestion indépendante, reliée au travers une interface à l'unité centrale via le bus d'informations, ladite unité de gestion étant destinée à recevoir et à traiter ces événements en temps réel sans l'intermédiaire de l'unité centrale,
- une horloge de datation destinée à dater ces événements avant de les stocker d'une part dans une première mémoire interne à l'unité de gestion et d'autre part dans une seconde mémoire (73) interne à l'unité de gestion (70) avec sa date d'arrivée, les événements stockés dans ladite première mémoire (73) étant traités par l'unité de gestion (70) d'une manière synchrone, et
- une mémoire vive comprenant une table des actions préprogrammée, associée à l'unité de gestion, destinée à attribuer des actions appropriées aux événements reçus par cette dernière.

Le bus d'informations est un bus standardisé du type choisi parmi un bus PCI, un bus VME, un bus compact PCI, un bus USB.

Avantageusement, les première et seconde mémoires sont du type FIFO et la mémoire vive comprenant la table des actions est une mémoire RAM double port.

### Brève description des dessins

D'autres particularités et avantages du procédé et du système selon l'invention ressortiront à la lecture de la description faite ci-après, à titre indicatif mais non limitatif, en référence aux dessins annexés sur lesquels :
- la figure 1 est une vue très schématique d'un module de gestion des événements, selon l'invention, implanté dans un système informatique standard;
- la figure 2 est une vue très schématique d'un module de gestion des événements, selon l'invention, implanté dans un système informatique standard d'une architecture basée sur un bus d'informations de type PCI ;
- la figure 3 est un schéma détaillé d'un module de gestion des événements des figures 1 et 2 ;
- la figure 4 montre les différentes zones d'un mot stocké dans un tableau
   des actions selon l'invention ;
- la figure 5 est un organigramme montrant le déroulement général d'un processus de gestion des événements selon l'invention ;
- la figure 6 est un organigramme montrant un processus de détection des événements selon la figure 5 ;
- la figure 7 est une variante de la figure 6 ;
- la figure 8 est un organigramme montrant un processus de traitement des événements selon la figure 5 ;
- la figure 9 illustre un exemple de gestion d'un événement en provenance d'un registre d'horloge interne selon l'invention ;
- la figure 10 montre des mots stockés dans un tableau des actions selon l'exemple de la figure 9 ;
- la figure 11 illustre un exemple de gestion d'un événement externe selon l'invention ;
- la figure 12 montre des mots stockés dans un tableau des actions selon l'exemple de la figure 11 ; et
- la figure 13 est une vue très schématique d'un système informatique standard selon l'art antérieur.

### Description détaillée des modes de réalisation

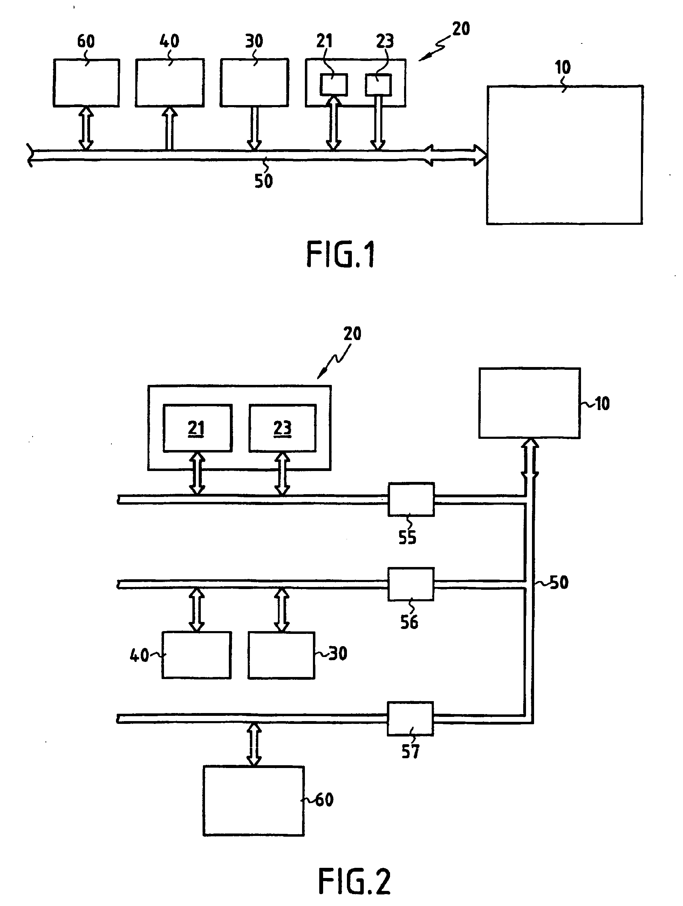

La figure 1 montre très schématiquement l'implantation d'un module de gestion 60 des événements, selon l'invention, dans un système informatique standard. Le module de gestion 60 est relié à l'unité centrale 10 via un bus d'information 50 qui admet un montage multi-maître ou multiprocesseur permettant ainsi, au module de gestion 60 d'agir séparément et d'une manière indépendante de l'unité centrale 10. Dans ce cas, le bus d'information 50 est un bus standardisé du type PCI, VME, compact PCI, ou USB. Ainsi, l'implantation du module de gestion 60 transforme le système informatique standard en un système informatique temps réel.

La figure 2 est en effet, un exemple d'un module de gestion 60 des événements, implanté dans un système informatique standard d'une architecture basée sur un bus d'informations 50 de type PCI. Le bus PCI est un bus synchrone supportant un multiplexage de données, d'adresses et de signaux, et permettant un montage multi-maître. En outre, la spécification du bus PCI autorise l'interconnexion et l'emploi de passerelles ou ponts. Cette figure montre que les unités mémoires 20, périphériques 30, 40 ainsi que le module de gestion 60 sont installées en cascade, à travers des ponts 55, 56, 57 respectivement. Les ponts jouent le rôle des filtres pour les unités qui ne sont pas concernées par le dialogue de l'unité centrale. Ainsi, le pont 57 permet de mieux isoler le module de gestion 60 de l'unité centrale 10 lorsque ce premier est en dialogue avec d'autres unités électroniques.

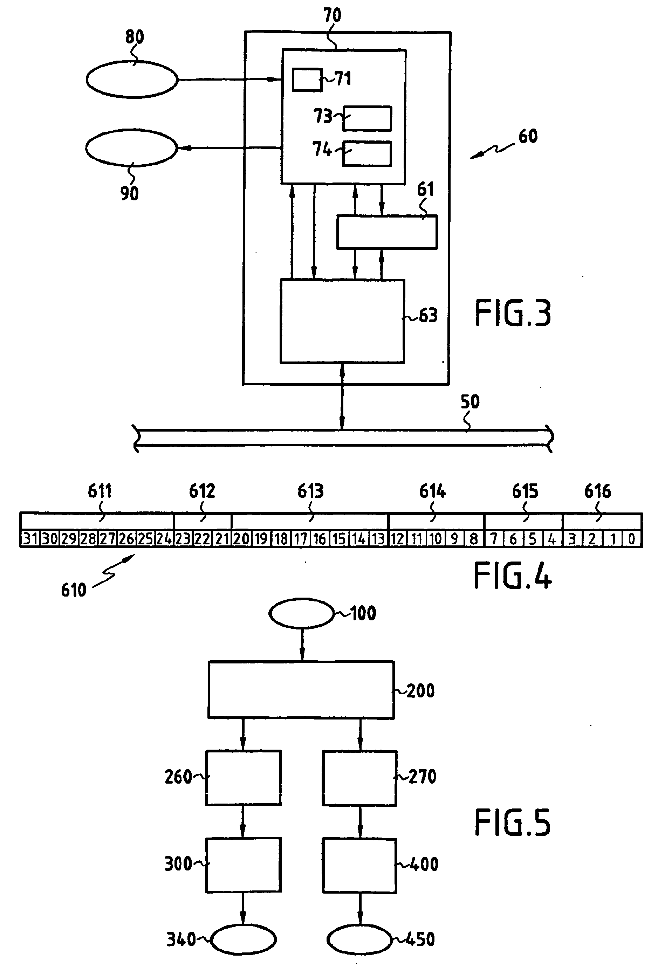

La figure 3 montre de façon plus détaillée le module de gestion 60 des événements des figures 1 et 2. Ce module comprend une unité de gestion 70, pilotée par une horloge de synchronisation, par exemple, à une fréquence de 33 MHz. Cette unité de gestion 70 est destinée à recevoir des événements 80 et à exécuter des actions 90 correspondantes en temps réel et sans l'intermédiaire de l'unité centrale. Au moins une action appropriée est attribuée à chaque événement reçu. Pour cela, l'unité de gestion 70 est en liaison avec une mémoire vive 61, par exemple de type RAM double ports, accessible en lecture et en écriture. Bien entendu, l'unité de gestion 70 est connectée au bus d'information 50 au travers d'une interface 63 standard qui facilite l'échange de données avec ce bus d'information 50. Par ailleurs, le module de gestion 60 comporte une pluralité de registres d'horloges ou compteurs internes, non représentés sur la figure et qui peuvent se trouver dans l'unité de gestion 70 ou dans l'interface 63. A titre d'exemple, le module de gestion 60 comporte seize registres d'horloges à 20-bits cadencés à la milliseconde.

Un événement 80 est d'une manière générale, défini par un signal de déclenchement qui identifie l'événement et éventuellement par un vecteur ou pointeur indiquant à l'unité de gestion 70 l'adresse de l'action ou des actions correspondantes à exécuter.

Par ailleurs, l'unité de gestion 70 comporte une horloge de datation 71, par exemple, d'une fréquence de 10 MHz permettant ainsi de dater un événement 80 à la précision de la centaine de nanosecondes.

Cette horloge de datation 71 peut être constitué, d'un premier registre de 16-bits et d'un second registre de 32-bits. Le premier registre réalise une base de temps intermédiaire à 1 milliseconde, et pilote ensuite le deuxième registre avec cette base de temps, de sorte qu'un événement 80 peut être dater pendant 2³².10⁻³= 4,3.10⁶ secondes.

En outre, l'unité de gestion 70 est associée à une première mémoire 73 et à une seconde mémoire 74 destinées à stocker les événements 80 reçus. De préférence, les première 73 et seconde 74 mémoires sont internes à l'unité de gestion 70.

A titre d'exemple, la première mémoire 73 est du type « premier entré premier sorti ou FIFO » de 256 mots de 16-bits mémorisant les événements qui restent à traiter par ordre chronologique.

La deuxième mémoire 74 peut être constituée de deux zones mémoires de type FIFO accessibles indépendamment. Une première zone mémoire est destinée à stocker des dates en millisecondes et une seconde zone mémoire est destinée à stocker les événements.

La première zone mémoire des millisecondes est par exemple, composé de 256 mots de 32-bits représentant la date, en millisecondes, de l'arrivée de l'événement. La seconde zone mémoire des événements est par exemple, composé de 256 mots de 32-bits de sorte que, les huit bits de poids forts permettent de connaître l'origine de l'événement, les huit bits suivants représentant le numéro du vecteur ayant produit l'événement et les seize bits de poids faibles représentant le temps en centaines de nanosecondes.

Conformément à l'invention, la mémoire vive 61 comprend une table des actions mémorisant des mots qui définissent l'action en fonction de l'événement. La figure 4 est un exemple montrant les différentes zones d'un mot 610 de 32-bits, de la table d'action. Les huit bits de poids forts correspondent à un vecteur d'entrée 611 associé à l'événement, les trois bits suivants représentent l'action 612 correspondante, les huit bits suivants représentent un vecteur de sortie 613 associé à l'action suivie d'un complément 614 de cinq bits, les quatre bits suivants représentent un signal de sortie 615 et finalement les quatre bits de poids faibles représentent le numéro 616 d'un registre d'horloge.

On notera que, la table des actions est initialisée ou écrite avant la mise en marche du traitement des événements, au travers du bus d'informations 50, et peut être lue à tout moment au travers du même bus.

Un procédé de gestion des événements, selon l'invention, sera maintenant décrit en référence aux figures 5 à 8 en plus de la figure 3.

La figure 5 est un organigramme montrant le déroulement général du processus de gestion des événements comprenant des phases de détection, de traitement et d'observation de ces événements.

A l'étape 100, un événement 80 est signalé par un signal de déclenchement qui peut provenir soit de l'extérieur du système informatique, soit à travers le bus d'informations 50 par l'écriture d'une donnée provenant d'une unité adjacente à l'unité de gestion 70, soit d'un registre d'horloge interne au module de gestion 60.

A l'étape 200, l'événement est détecté par l'unité de gestion 70 et est daté avec une précision de l'ordre de 100 nanosecondes, grâce à l'horloge de datation 71. L'événement reçu est stocké d'une part, dans la première mémoire 73 (étape 260) et d'autre part, dans la seconde mémoire 74 avec sa date d'arrivée (étape 270).

A l'étape 300, les événements stockés dans la première mémoire interne 73 sont traités d'une manière synchrone. Ensuite, à l'étape 340 l'action est exécutée après une lecture de la table des actions dans la mémoire vive 61. L'action peut être destinée à un registre d'horloge, au bus d'informations, à un générateur de signaux ou à une interface d'entrée-sortie.

En général, la gestion en temps réel de l'événement est inférieure ou égale à environ une microseconde. A titre d'exemple, l'arrivée d'un événement, sa datation et sa mémorisation correspondent à 2 cycles d'horloge de datation à 10 MHz, c'est-à-dire à 200 nanosecondes. La recherche de l'action dans la mémoire vive 61 à double port correspond à 10 cycles d'horloge de synchronisation à 33 MHz, c'est-à-dire à 303 nanosecondes. La préparation du traitement correspond à 2 cycles d'horloge de synchronisation à 33 MHz, c'est-à-dire à 60,6 nanosecondes. Et, l'exécution de l'action, dans le cas d'une architecture à bus PCI en mode maître, correspond à 5 cycles d'horloge de synchronisation à 33 MHz, c'est-à-dire à 151,5 nanosecondes. Ainsi, dans cet exemple, le temps de réponse global est de 715,1 nanosecondes et donc inférieur à 1 microseconde.

A l'étape 400, les événements stockés dans la seconde mémoire interne 74 peuvent être observés au travers du bus d'informations 50 (étape 450) d'une manière connue en soi, par l'intermédiaire de l'environnement logiciel du système informatique standard. Ainsi, il est possible de contrôler et de retracer l'historique de ces événements.

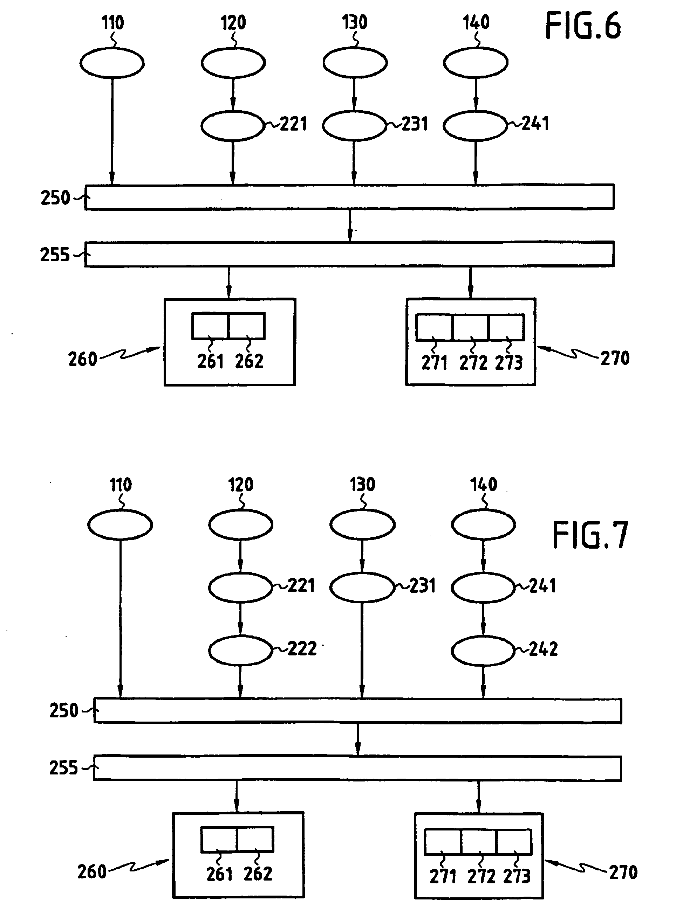

La figure 6 montre de façon plus détaillée le processus de détection des événements. De façon indépendante, la nature de l'événement reçu peut être constitué d'un signal de déclenchement interne (étape 110), d'un signal de déclenchement externe (étape 120), d'un signal de déclenchement avec un vecteur associé en provenance du bus d'informations (étape 130) ou d'un signal de déclenchement externe avec un vecteur associé (étape 140). On notera que, des conflits éventuels entre différents événements simultanés sont éliminés, par exemple, de façon aléatoire.

Le signal de déclenchement interne (étape 110) peut résulter d'un registre d'horloge interne au module de gestion 60 et qui déclenche des signaux à des intervalles de temps préprogrammés. Ces intervalles de temps peuvent être réguliers, afin de permettre à l'unité de gestion 70 d'émettre une commande d'émission de données de façon cyclique et déterministe. L'unité de gestion peut décider la mise en route ou l'arrêt de ces registres. Par ailleurs, les registres d'horloges peuvent avoir un fonctionnement automatique.

On notera que, le signal en provenance d'un registre d'horloge interne étant déjà synchronisé, on passe alors directement à une étape 250 après la réception de ce signal.

En outre, les événements reçus aux étapes 120, 130 et 140 sont re-synchronisés à la fréquence de l'horloge interne du système informatique, aux étapes 221, 231 et 241 respectivement avant d'aller à l'étape 250. Cette fréquence de re-synchronisation est par exemple, de l'ordre de 10 MHz.

A l'étape suivante 250, une date d'arrivée, à la précision de la centaine de nanosecondes, est attribuée à chaque événement reçu par l'horloge de datation 71.

A l'étape 255, les événements sont identifiés par l'unité de gestion 70 et le cas échéant auto-vectorisés, c'est-à-dire que des vecteurs sont réservés pour être associés d'une part, aux signaux externes ne comportant pas de vecteurs et d'autre part, aux signaux en provenance des registres d'horloges internes. Ensuite, les événements sont stockés aux étapes 260 et 270.

A l'étape 260, l'événement comportant une donnée correspondant au signal de déclenchement ou d'identification 261 ainsi qu'une donnée correspondant au vecteur associé 262, est stocké dans la première mémoire interne 73.

A l'étape 270, l'événement comportant une donnée correspondant au signal de déclenchement ou d'identification 271, une donnée correspondant au vecteur associé 272 ainsi qu'une donnée correspondant à la date d'arrivée 273, est stocké dans la seconde mémoire interne 74.

On notera que, lorsque la première mémoire 73 et/ou la seconde mémoire 74 sont pleines, une interruption est générée par l'unité de gestion 70 vers l'unité centrale 10 au travers du bus d'informations 50 afin de signaler une éventuelle perte d'un ou de plusieurs événements détectés. Il est à remarquer que cette interruption est le seul lien, en temps réel, avec l'unité centrale.

En variante, un autre processus de détection est illustré par la figure 7. II se distingue de celui de la figure 6 en ce qu'après les resynchronisations des étapes 221 et 241, les événements externes sont filtrés aux étapes 222 et 242 respectivement avant d'aller à l'étape 250. Ainsi, pour une meilleure sécurité, les événements externes sont filtrés, par des filtres connus en soi, afin d'éliminer des parasites éventuels provenant des périphériques voisins. En revanche, la filtration implique une perte de quelques microsecondes et par conséquent, une augmentation du temps de réponse.

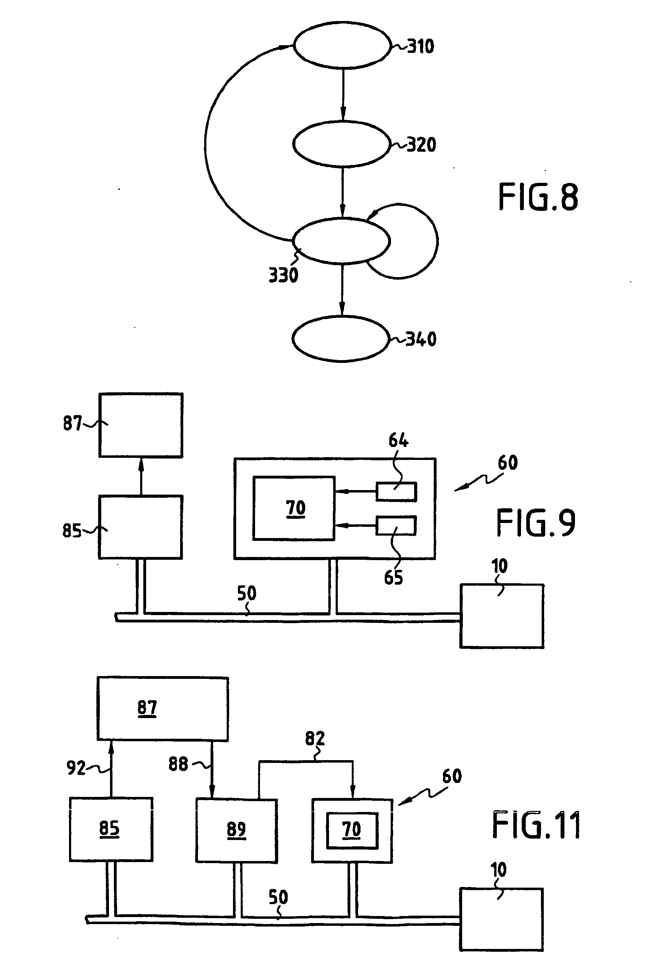

La figure 8 montre de façon plus détaillée le processus de traitement des événements.

Dans le cas où un ou plusieurs événements seraient présents dans la première mémoire interne 73, le processus de traitement se déclenche à l'étape 310.

A l'étape 320, les vecteurs ou les auto-vecteurs associés aux événements qui sont stockés dans la première mémoire interne 73 sont lus de façon séquentielle.

Ensuite, à l'étape 330, le vecteur associé à l'événement reçu en premier est recherché dans la table des actions. Si le vecteur indique qu'il n'y a plus d'autres actions à exécuter alors on revient à l'étape 310 de début. Par ailleurs, si le vecteur n'est pas trouvé dans la table des actions, une interruption est générée et on revient aussi à l'étape 310 de début. En revanche, si le vecteur est trouvé, l'action ou les actions associées sont exécutées à l'étape 340.

Ainsi, en fonctionnement normal, c'est-à-dire mis à part une interruption éventuelle, l'unité centrale n'intervient pas dans les processus de détection et de traitement de l'événement. En conséquence, une action est exécutée en réponse à un événement en un temps de réponse très rapide de l'ordre d'une microseconde.

Par ailleurs, l'unité centrale sert par exemple, à initialiser les registres d'horloges ou à démarrer l'unité de gestion. Une fois que les initialisations sont terminées, l'unité centrale n'intervient plus dans le processus de gestion des événements et peut ainsi, être employée à toutes autres taches.

Les figures 9 et 10 illustrent un exemple de gestion d'un événement en provenance d'un registre d'horloge interne.

En effet, la figure 9 illustre très schématiquement, un système informatique selon l'invention, comportant une unité centrale 10 reliée via un bus d'informations 50 à un module de gestion 60 et à une unité d'interface numérique 85, par exemple une carte de type 1553, en relation numérique avec un équipement 87 externe. Par ailleurs, deux registres d'horloges 64 et 65 numérotés « 0 » et « 1» font partie du module de gestion 60. Bien entendu, le nombre de registres d'horloges n'est pas limité à deux.

Au départ, l'unité centrale 10 initialise les registres d'horloges 64 et 65 (« 0 » et « 1 ») à 100 millisecondes, démarre l'unité de gestion 70 du module de gestion 60 et initialise l'unité d'interface numérique 85, au travers du bus d'informations 50.

Lorsque le registre d'horloge 64 numéro « 0 » arrive au bout de son comptage, il génère un événement «E0» qui met d'abord en arrêt le registre « 0 » et qui lance ensuite un second registre d'horloge 65 numéro « 1 ». Ensuite, l'unité de gestion 70 écrit par exemple la donnée « 55 », au travers du bus d'informations 50, dans l'unité d'interface numérique 85 qui provoque l'émission de données vers l'équipement 87 externe.

Le processus décrit ci-dessus, peut être codé de la façon illustrée par la table des actions représentée sur la figure 10.

La première ligne indique que sur réception du vecteur d'entrée 611 « E0 = 11100000 », l'action 612 « 010 » arrête le registre d'horloge 64 numéro « 0 ».

La deuxième ligne indique que l'action 612 « 011» lance le registre d'horloge 65 numéro « 1 ».

A la troisième ligne l'action 612 « 000 », indiquant une écriture à travers le bus d'informations 50, est exécutée en écrivant le vecteur de sortie 613 « 55 » avec un complément 614 « 00000 », à l'adresse contenue dans un registre « adresse 1 », de l'unité d'interface numérique 85, indiqué par le signal de sortie 615 « 0000 ».

La ligne suivante contenant le vecteur d'entrée 611 « FF = 11111111 » indique à l'unité de gestion 70 qu'il n'y a plus d'autres actions à exécuter pour le vecteur d'entrée 611 « E0 ».

Les figures 11 et 12 illustrent un exemple de gestion d'un événement externe. Cet exemple, concerne une surveillance d'un certain seuil de tension prédéterminé d'un équipement externe.

En effet, la figure 11 illustre très schématiquement, un module informatique selon l'invention, comportant une unité centrale 10, un système de gestion 60, une unité d'acquisition analogique 89 et une unité d'interface numérique 85, par exemple une carte du type 1553. Ces différentes unités sont reliées entre elles au travers du bus d'informations 50. Les unités d'acquisition analogique 89 et d'interface numérique 85 sont en relation avec un équipement 87 externe. L'unité d'acquisition analogique 89 surveille le niveau de tension de l'équipement 87 externe dont le seul lien avec le module de gestion 60 est une liaison numérique à travers l'unité d'interface numérique 85.

L'unité centrale 10 démarre l'unité de gestion 70 du module de gestion 60, demande à l'unité d'interface numérique 85 d'envoyer un message de début de génération à l'équipement 87 et finalement demande à l'unité d'acquisition analogique 89 de commencer une surveillance (flèche 88) de la tension de l'équipement 87 externe. A partir de cet instant l'unité centrale 10 n'intervient plus dans la gestion des événements.

Lorsque la tension de l'équipement 87 dépasse le seuil fixé, l'unité d'acquisition analogique 89 génère (flèche 82) un signal de déclenchement et un vecteur associé, par exemple le vecteur « 11 », à l'unité de gestion 70. A son tour, l'unité de gestion 70 va scruter la table des actions et écrire une donnée, par exemple « 22 », dans l'unité d'interface numérique 85. Suite à la réception du vecteur « 22 », l'unité d'interface numérique 85 va émettre (flèche 92) une commande à l'équipement 87 externe pour stabiliser la tension.

Le processus décrit ci-dessus, peut être codé de la façon illustrée par la table des actions représentée sur la figure 12.
Sur réception de l'événement au vecteur d'entrée 611 « 11 », l'action 612 « 000 », indiquant une écriture à travers le bus d'informations 50, est exécutée en écrivant le vecteur de sortie 613 « 22 » avec un complément 614 « 00000 », à l'adresse contenue dans un registre « adresse 1 », de l'unité d'interface numérique 85, indiqué par le signal de sortie 615 « 0000 ».

La ligne suivante contenant le vecteur d'entrée 611 « FF » indique à l'unité de gestion 70 qu'il n'y a plus d'autres actions à exécuter pour le vecteur d'entrée « E0 ».

## Revendications

1. Procédé de gestion des événements, dans un système informatique standard comportant une unité centrale (10) connectée à des unités mémoires (20) et des périphériques (30, 40) par un bus d'informations (50) permettant un montage multi-maître, comprenant les étapes suivantes :
- recevoir les évènements,
- dater et stocker ces événements,
- attribuer au moins une action appropriée à chaque événement reçu,
- exécuter cette action en réponse à l'événement reçu,
**caractérisé en ce que** les étapes de gestion précitées sont réalisées en temps réel sans accéder à l'unité centrale (10), par une unité de gestion (70) comprise dans un module de gestion (60) indépendant relié au bus d'informations (50) et implanté dans le système informatique standard, chaque événement reçu étant daté au moyen d'une horloge de datation (71) comprise dans l'unité de gestion (70) et étant stocké d'une part dans une première mémoire (73) associée à l'unité de gestion (70) et d'autre part dans une seconde mémoire (74) associée à l'unité de gestion (70) avec sa date d'arrivée, les événements stockés dans ladite première mémoire (73) étant traités d'une manière synchrone, et ladite action attribuée à l'événement reçu étant lue dans une table des actions dans une mémoire vive (61) associée à l'unité de gestion (70) et préprogrammée au travers du bus d'information (50).

2. Procédé de gestion selon la revendication 1, **caractérisé en ce que** l'arrivée d'un événement, sa datation et sa mémorisation sont de l'ordre de deux cycles d'horloge de datation à 10 MHz, la recherche de l'action dans la mémoire vive (61) est de l'ordre de dix cycles d'horloge de synchronisation à 33 MHz, la préparation du traitement est de l'ordre de deux cycles d'horloge de synchronisation à 33 MHz, et l'exécution de l'action est de l'ordre de 5 cycles d'horloge de synchronisation à 33 MHz, de sorte que la gestion en temps réel est de l'ordre d'une microseconde.

3. Procédé de gestion selon l'une quelconque des revendications 1 et 2, **caractérisé en ce que** le module de gestion (60) indépendant est isolé de l'unité centrale (10) par un pont (57).

4. Procédé de gestion selon l'une quelconque des revendications 1 à 3, **caractérisé en ce que** les événements reçus par l'unité de gestion (70) sont générés par un registre d'horloge (64, 65) interne au module de gestion (60).

5. Procédé de gestion selon l'une quelconque des revendications 1 à 3, **caractérisé en ce que** les événements reçus par l'unité de gestion (70) proviennent d'une unité adjacente (89) au module de gestion (60).

6. Procédé de gestion selon l'une quelconque des revendications 1 à 3, **caractérisé en ce que** les événements reçus par l'unité de gestion (70) proviennent d'un équipement (87) extérieur au système informatique.

7. Procédé de gestion selon l'une quelconque des revendications 5 et 6, **caractérisé en ce que** les événements reçus par l'unité de gestion (70) sont synchronisés à une fréquence correspondante à celle d'une horloge interne au système informatique.

8. Procédé de gestion selon l'une quelconque des revendications 6 et 7, **caractérisé en ce que** les événements reçus de l'équipement (87) extérieur sont filtrés afin d'éliminer d'éventuels parasites.

9. Procédé de gestion selon l'une quelconque des revendications 1 à 8, **caractérisée en ce qu'**une interruption est générée par l'unité de gestion (70) lorsqu'un événement ne peut pas être associé à une action.

10. Module de gestion des événements, implanté dans un système informatique standard comportant une unité centrale (10) connectée à des unités mémoires (20) et des périphériques (30, 40) par un bus d'informations (50) permettant un montage multi-maître, **caractérisé en ce qu'**il comprend :
- une unité de gestion (70) indépendante, reliée au travers d'une interface (63) à l'unité centrale (10) via le bus d'informations (50), ladite unité de gestion (70) étant destinée à recevoir et à traiter ces événements en temps réel sans l'intermédiaire de l'unité centrale (10),
- une horloge de datation (71) destiné à dater ces événements avant de les stocker d'une part dans une première mémoire (73) interne à l'unité de gestion (70) et d'autre part dans une seconde mémoire (74) interne à l'unité de gestion (70) avec sa date d'arrivée, les événements stockés dans ladite première mémoire (73) étant traités par l'unité de gestion (70) d'une manière synchrone, et
- une mémoire vive (61) comprenant une table des actions préprogrammée au travers du bus d'information (50), associée à l'unité de gestion (70), destinée à attribuer des actions appropriées aux événements reçus par cette dernière.

11. Module de gestion selon la revendication 10, **caractérisé en ce que** le bus d'information (50) est un bus standardisé du type choisi parmi un bus PCI, un bus VME, un bus compact PCI, un bus USB.

12. Module de gestion selon l'une quelconque des revendications 10 et 11, **caractérisé en ce que** les première (73) et seconde (74) mémoires sont du type FIFO.

13. Module de gestion selon la revendication 10, **caractérisé en ce que** la mémoire vive (61) comprenant la table des actions est une mémoire RAM double port.

## Claims

1. A method of managing events in a standard computer system comprising a central unit (10) connected to memory units (20) and peripheral devices (30, 40) by a data bus (50) allowing a multimaster configuration, the method comprising the following steps:
- receiving events,
- time-stamping and storing the events,
- assigning at least one appropriate action to each received event, and
- executing that action in response to the received event,
which method is **characterized in that** the above-mentioned management steps are carried out in real time without access to the central unit (10) by a management unit (70) included in an independent management module (60) connected to the data bus (50) and incorporated into the standard computer system, each received events being time-stamped by a time-stamping clock (71) internal to the management unit (70) and being stored in a first memory (73) associated with the management unit (70) and also in a second memory (74) associated with the management unit (70) with its occurrence date, the events stored in the first memory (73) being processed synchronously, and the action corresponding to the received event being read in a table of actions in a random-access memory (61) associated with the management unit (70) and preprogrammed via the data bus (50).

2. A management method according to claim 1, **characterized in that** the occurrence, time-stamping and storing of an event correspond to two 10MHz time-stamping clock cycles, searching the double part random-access memory (61) for the action corresponds to ten cycles of the 33MHz synchronization clock, preparation of processing corresponds to two cycles of the 33MHz synchronization clock and the execution of the action corresponds to five cycles of the 33MHz synchronization clock, such that the timescale of real-time management is of the order of one microsecond.

3. A management method according to any one of claims 1 and 2, **characterized in that** the independent management module (60) is isolated from the central unit (10) by a bridge (57).

4. A management method according to any one of claims 1 to 3, **characterized in that** events received by the management unit (70) are generated by a clock register (64, 65) internal to the management module (60).

5. A management method according to any one of claims 1 to 3, **characterized in that** events received by the management unit (70) come from a unit (89) adjacent the management module (60).

6. A management method according to any one of claims 1 to 3, **characterized in that** events received by the management unit (70) come from an equipment (87) external to the computer system.

7. A management method according to any one of claims 5 and claim 6, **characterized in that** events received by the management unit (70) are synchronized to a frequency corresponding to that of a clock internal to the computer system.

8. A management method according to any one of claims 6 and 7, **characterized in that** events received from the external equipment (87) are filtered to eliminate interference.

9. A management method according to any one of claims 1 to 8, **characterized in that** the management unit (70) generates an interrupt if it is not possible to associate an event with an action.

10. Event management module incorporated into a standard computer system comprising a central unit (10) connected to memory units (20) and peripheral devices (30, 40) by a data bus (50) allowing a multimaster configuration, which module is **characterized in that** it comprises:
- an independent management unit (70) connected to the central unit (10) via an interface (63) and the data bus (50), said management unit (70) being adapted to receive and process events in real time without intervention by the central unit (10),
- a time-stamping clock (71) adapted to time-stamp these events before storing them in a first memory (73) internal to the management unit (70) and also in a second memory (74) internal to the management unit (70) with its occurrence date, the events stored in the first memory (73) being processed synchronously by the management unit (70), and
- a random-access memory (61) containing a table of actions preprogrammed via the data bus (50), associated with the management unit (70) and adapted to assign appropriate actions to events received thereby.

11. A management module according to claim 10, **characterized in that** the data bus (50) is a standard bus selected from the group comprising a PCI bus, a VME bus, a compact PCI bus and a USB bus.

12. A management module according to any one of claims 10 and 11, **characterized in that** the first memory (73) and the second memory (74) are of the FIFO type.

13. A management module according to claim 10, **characterized in that** the random-access memory (61) containing the table of actions is a double-port RAM.

## Patentansprüche

1. Verfahren zur Verwaltung von Ereignissen in einem Standardcomputersystem, das eine Zentraleinheit (10) umfaßt, die über einen Datenbus (50), der eine Multi-Master-Schaltung ermöglicht, an Speichereinheiten (20) und Peripheriegeräte (30, 40) angeschlossen ist, umfassend die folgenden Schritte:
- die Ereignisse empfangen,
- diese Ereignisse datieren und speichern,
- wenigstens eine geeignete Aktion jedem empfangenen Ereignis zuordnen,
- diese Aktion als Reaktion auf das empfangene Ereignis ausführen,
**dadurch gekennzeichnet, daß** die vorgenannten Verwaltungsschritte in Echtzeit ohne Zugriff auf die Zentraleinheit (10) durch eine Verwaltungseinheit (70) durchgeführt werden, die in einem unabhängigen Verwaltungsmodul (60) enthalten ist, das mit dem Datenbus (50) verbunden und in dem Standardcomputersystem untergebracht ist, wobei jedes empfangene Ereignis mittels eines in der Verwaltungseinheit (70) enthaltenen Datierungstaktgebers (71) datiert wird und einerseits in einem der Verwaltungseinheit (70) zugeordneten ersten Speicher (73) und andererseits in einem der Verwaltungseinheit (70) zugeordneten zweiten Speicher (74) mit seinem Eingangsdatum gespeichert wird, wobei die in dem ersten Speicher (73) gespeicherten Ereignisse synchron verarbeitet werden und wobei die dem empfangenen Ereignis zugeordnete Aktion aus einer Aktionstabelle in einem Arbeitsspeicher (61) gelesen wird, die der Verwaltungseinheit (70) zugeordnet ist und durch den Datenbus (50) vorprogrammiert wird.

2. Verwaltungsverfahren nach Anspruch 1, **dadurch gekennzeichnet, daß** der Eingang eines Ereignisses, sein Datieren und sein Speichern in der Größenordnung von zwei Datierungstaktzyklen mit 10 MHz liegen, die Suche der Aktion in dem Arbeitsspeicher (61) in der Größenordnung von zehn Synchronisierungstaktzyklen mit 33 MHz liegt, die Vorbereitung der Verarbeitung in der Größenordnung von zwei Synchronisierungstaktzyklen mit 33 MHz liegt und das Ausführen der Aktion in der Größenordnung von 5 Synchronisierungstaktzyklen mit 33 MHz liegt, so daß die Echtzeitverwaltung in der Größenordnung von einer Mikrosekunde liegt.

3. Verwaltungsverfahren nach einem der Ansprüche 1 und 2, **dadurch gekennzeichnet, daß** das unabhängige Verwaltungsmodul (60) durch eine Brücke (57) von der Zentraleinheit (10) getrennt ist.

4. Verwaltungsverfahren nach einem der Ansprüche 1 bis 3, **dadurch gekennzeichnet, daß** die durch die Verwaltungseinheit (70) empfangenen Ereignisse durch ein Zeitgeberregister (64, 65) innerhalb des Verwaltungsmoduls (60) generiert werden.

5. Verwaltungsverfahren nach einem der Ansprüche 1 bis 3, **dadurch gekennzeichnet, daß** die durch die Verwaltungseinheit (70) empfangenen Ereignisse von einer dem Verwaltungsmodul (60) benachbarten Einheit (89) stammen.

6. Verwaltungsverfahren nach einem der Ansprüche 1 bis 3, **dadurch gekennzeichnet, daß** die durch die Verwaltungseinheit (70) empfangenen Ereignisse von einer Einrichtung (87) außerhalb des Computersystems stammen.

7. Verwaltungsverfahren nach einem der Ansprüche 5 und 6, **dadurch gekennzeichnet, daß** die durch die Verwaltungseinheit (70) empfangenen Ereignisse mit einer Frequenz synchronisiert werden, die derjenigen eines Taktgebers innerhalb des Computersystems entspricht.

8. Verwaltungsverfahren nach einem der Ansprüche 6 und 7, **dadurch gekennzeichnet, daß** die von der externen Einrichtung (87) erhaltenen Ereignisse gefiltert werden, um eventuelle Störungen zu beseitigen.

9. Verwaltungsverfahren nach einem der Ansprüche 1 bis 8, **dadurch gekennzeichnet, daß** durch die Verwaltungseinheit (70) eine Unterbrechung erzeugt wird, wenn ein Ereignis keiner Aktion zugeordnet werden kann.

10. Modul zur Verwaltung von Ereignissen, das in einem Standardcomputersystem untergebracht ist, welches eine Zentraleinheit (10) umfaßt, die über einen Datenbus (50), der eine Multi-Master-Schaltung ermöglicht, an Speichereinheiten (20) und Peripheriegeräte (30, 40) angeschlossen ist, **dadurch gekennzeichnet, daß** es umfaßt:
- eine unabhängige Verwaltungseinheit (70), die durch eine Schnittstelle (63), über den Datenbus (50) mit der Zentraleinheit (10) verbunden ist, wobei die Verwaltungseinheit (70) dazu bestimmt ist, diese Ereignisse ohne Einschalten der Zentraleinheit (10) in Echtzeit zu empfangen und zu verarbeiten,
- einen Datierungstaktgeber (71), der dazu bestimmt ist, diese Ereignisse zu datieren, bevor sie einerseits in einem ersten Speicher (73) innerhalb der Verwaltungseinheit (70) und andererseits in einem zweiten Speicher (74) innerhalb der Verwaltungseinheit (70) mit ihrem Eingangsdatum gespeichert werden, wobei die in dem ersten Speicher (73) gespeicherten Ereignisse durch die Verwaltungseinheit (70) synchron verarbeitet werden, und
- einen Arbeitsspeicher (61), der eine durch den Datenbus (50) vorprogrammierte Aktionstabelle enthält, die der Verwaltungseinheit (70) zugeordnet ist, welche dazu bestimmt ist, den durch sie empfangenen Ereignissen geeignete Aktionen zuzuordnen.

11. Verwaltungsmodul nach Anspruch 10, **dadurch gekennzeichnet, daß** der Datenbus (50) ein standardisierter Bus des Typs ist, der aus einem PCI-Bus, einem VME-Bus, einem kompakten PCI-Bus, einem USB-Bus ausgewählt ist.

12. Verwaltungsmodul nach einem der Ansprüche 10 und 11, **dadurch gekennzeichnet, daß** der erste Speicher (73) und der zweite Speicher (74) vom Typ FIFO sind.

13. Verwaltungsmodul nach Anspruch 10, **dadurch gekennzeichnet, daß** der die Aktionstabelle enthaltende Arbeitsspeicher (61) ein Dual-Port-RAM ist.
